# EUROPÄISCHE PATENTANMELDUNG

(11) **EP 1 177 993 A1**
(43) Veröffentlichungstag der Anmeldung: **06.02.2002**
(21) Anmeldenummer: 01118310.0
(22) Anmeldetag: 27.07.2001
(51) Int. Cl.: B65G 47/52, B65G 47/74, B65G 47/53, B07C 5/14, B27B 31/08, B65H 29/12

(54) **Sortiervorrichtung**

(30) Priorität: 31.07.2000 DE 10037658
(71) Anmelder: Kallfass Maschinenbau GmbH & Co., 72270 Klosterreichenbach (DE)
(72) Erfinder: Ernst Kallfass, D 72270 Klosterreichenbach (DE); Hans Haist, 72270 baiersbronn (DE); Reinhold Schmelzle, 72270 Baiersbronn (DE)
(74) Vertreter: Frank, Gerhard, Dipl.-Phys.

(57) **Zusammenfassung**

Bei einer Vorrichtung zum Aussortieren von Brettern aus einem Bretterteppich ist eine Fördereinrichtung vorgesehen, die den Bretterteppich entlang einer Förderrichtung (A) bewegt. Neben der Fördereinrichtung ist ein Querförderer mit wenigstens einem Rollenpaar aus einer oberen und einer unteren Rolle angeordnet, wobei die Richtungen (B-B) der Achsen der Rollen parallel zueinander sind und die Rollen im Wesentlichen übereinander angeordnet sind. Wenigstens eine Rolle ist vertikal bewegbar und wenigstens eine Rolle ist antreibbar. Dadurch, dass die Richtung (B-B) der Achsen der Rollen mit der Förderrichtung (A) einen spitzen Winkel einschließt, wird ein Anstauen der folgenden Bretter beim Aussortieren eines Brettes verhindert oder zumindest zeitlich verkürzt wird.

## Beschreibung

Die Erfindung betrifft eine Vorrichtung zum Aussortieren von Brettern aus einem Bretterteppich nach dem Oberbegriff des Anspruchs 1.

Solche Vorrichtungen werden in Betrieben der holzverarbeitenden Industrie, wie Hobel- und Sägewerken eingesetzt. Sie dienen dazu, unbrauchbare Bretter oder Leisten aus einem Strom von Brettern oder Leisten auszusortieren. Im folgenden wird für Bretter, Leisten und ähnliche Langhölzer zusammenfassend der Begriff Bretter benutzt.

Bei den gattungsgemäßen Vorrichtungen nach dem Stand der Technik werden die Bretter auf einer Fördereinrichtung, beispielsweise einem Ketten- oder Bandförderer, an einer für die Aussonderung zuständigen Person vorbeigefördert. Hierbei befinden sich die der aussortierenden Person zugewandten Stirnkanten der Bretter in etwa in einer Ebene. Sieht die für das Aussortieren zuständige Person ein Brett, das aufgrund seiner mangelhaften Qualität, beispielsweise weil es verzogen ist, entfernt werden soll, so zieht sie dieses Brett um einige Zentimeter zu sich her, so dass die Stirnkante gegenüber den anderen Brettern hervortritt.

Die eigentliche Vorrichtung zum Aussortieren ist in Förderrichtung stromab der Bedienperson neben der Fördereinrichtung angeordnet. Bei bisherigen Anlagen besteht diese Vorrichtung aus zwei angetriebenen übereinander angeordneten Rollen, deren Achsen im Wesentlichen im rechten Winkel zur Förderrichtung der Fördereinrichtung stehen. Eine der beiden Rollen trägt auf ihrer Oberfläche eine förderschneckenartige Profilierung. Die angetriebenen Rollen sind so angeordnet, dass die Bretter, die in ihrer Lage nicht verändert wurden, von den Rollen nicht erfasst werden. Bretter hingegen, deren Stirnfläche über die Stirnflächen der übrigen Bretter hinausstehen, jene Bretter also, die von der Bedienperson zum Aussortieren bestimmt sind, werden von dem Rollenpaar erfasst und aufrund der förderschneckenartigen Proflilierung der einen Rolle im rechten Winkel zur Förderrichtung herausgezogen.

Diese Vorrichtung hat jedoch den Nachteil, dass während des Aussortierens eines Brettes die nachfolgenden Bretter nicht weitergefördert werden können, so dass es zu Stauungen kommen kann, was den Gesamtdurchsatz der Anlage verringert. Im ungünstigsten Fall kann es sogar zu Verklemmungen und somit zu einem Stillstand der Anlage kommen.

Ein weiterer Nachteil der bisherigen Vorrichtungen zum Aussortieren ist, dass unmittelbar aufeinanderfolgende Bretter, die zum Aussortieren bestimmt sind, nicht zuverlässig entfernt werden, wodurch auch Bretter minderer Qualität zur Weiterverarbeitung gelangen können.

Ausgehend von diesem Stand der Technik ist es Aufgabe der Erfindung, die bekannten Vorrichtungen dahingehend weiterzubilden, dass ein Anstauen der folgenden Bretter beim Aussortieren eines Brettes verhindert oder zumindest zeitlich verkürzt wird.

Diese Aufgabe wird mit einer Vorrichtung mit den Merkmalen des Anspruchs 1 gelöst.

Auch die erfindungsgemäße Vorrichtung weist wenigstens ein Rollenpaar auf, wobei die Rollen im Wesentliche übereinander angeordnet sind und wobei wenigstens eine der Rollen angetrieben ist. Die Achsen der Rollen sind zueinander parallel und schließen mit der Förderrichtung der Fördereinrichtung einen spitzten Winkel ein. Wenigstens eine der Rollen ist vertikal bewegbar, so dass ein auszusortierendes Brett mittels der einen gegen die andere Rolle gedrückt werden kann. Dadurch, dass die Achsen der Rollen mit der Förderrichtung einen spitzen Winkel einschließen, erhält ein Brett, das aus dem Bretterteppich entfernt wird, zwei Geschwindigkeitskomponenten, nämlich eine in Förderrichtung und eine im rechten Winkel zur Förderrichtung. Durch richtige Wahl des spitzen Winkels und der Umfangsgeschwindigkeit der Rollen kann erreicht werden, dass die Geschwindigkeitskomponente in Förderrichtung genau der Fördergeschwindigkeit entspricht. Dadurch kann eine Stauung der nachfolgenden Bretter vermieden werden.

Nach Anspruch 3 kann der spitze Winkel der Fördergeschwindigkeit angepasst werden, was zu einer höheren Flexibilität der Anlage beiträgt.

Eine Ausgestaltung nach Anspruch 4 trägt zu einer erhöhten Automation und somit zu einer höheren Produktivität bei.

Ein weiteres Ziel der Erfindung ist es, eine Vorrichtung zum Aussortieren dahingehend weiterzubilden, dass mehrere unmittelbar aufeinanderfolgende Bretter zuverlässig aussortiert werden können. Dies wird mit Vorrichtungen mit den Merkmalen der Ansprüche 5 oder 9 erreicht. Nach Anspruch 5 sind mehrere voneinander unabhängige Rollenpaare hintereinander angeordnet. Dadurch wird erreicht, dass wenn ein auszusortierendes Brett das erste Rollenpaar passiert, weil dieses aufgrund des Aussortiervorgangs des vorausgehenden Brettes noch nicht wieder einsatzbereit ist, dieses Brett vom nachgeordneten Rollenpaar erfasst und aussortiert wird.

Dieses Prinzip wird auch bei einer Vorrichtung mit den Merkmalen des Anspruchs 7 angewandt. Hier ist jedoch die obere oder die untere Rolle einstückig ausgebildet und die jeweils andere Rolle ist mehrteilig ausgebildet; es sind also mehrere unabhängige Teilrollen vorhanden. Die prinzipielle Arbeitsweise entspricht der Vorrichtung nach Anspruch 5, es können sich hier jedoch konstruktive Vereinfachungen ergeben.

Weitere vorteilhafte Ausgestaltungen ergeben sich aus den anderen Unteransprüchen.

Die Erfindung wird nun anhand von Ausführungsbeispielen mit Bezug auf die Figuren näher erläutert. Es zeigen:
- Fig. 1: einen horizontalen Schnitt durch eine erfindungsgemäße Sortiervorrichtung,
- Fig. 2: eine Seitenansicht der Vorrichtung aus Fig. 1,
- Fig. 3: Prinzipskizzen zur Erläuterung der Geometrie,
- Fig. 4: eine der Fig. 1 entsprechende Ansicht eines weiteren Ausführungsbeispiels,

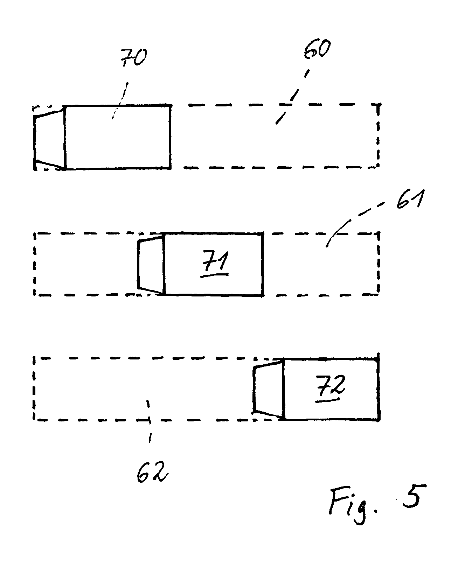

- Fig. 5: eine schematische Draufsicht auf eine Rollenanordnung gemäß einem weiteren Ausführungsbeispiel
- Fig. 6a,6b: eine gattungsgemäße Vorrichtung nach dem Stand der Technik.

### Erstes Ausführungsbeispiel

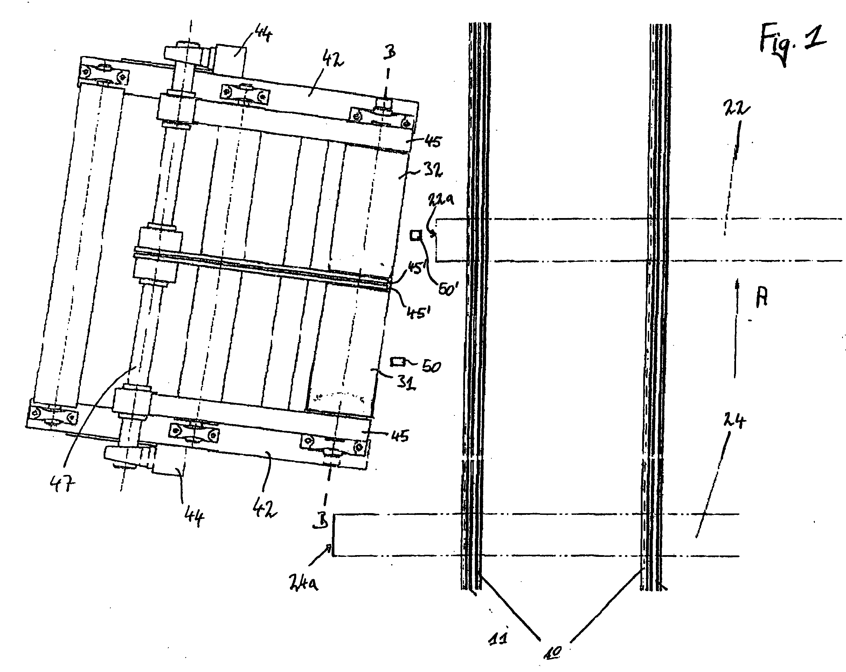

Auf den Fördersträngen 10 eines Kettenförderers werden Bretter entlang der Richtung A transportiert. Ursprünglich liegen die linksseitigen Stirnseiten der Bretter in etwa in derselben Ebene. Da jedoch nicht alle Bretter zur Weiterverarbeitung geeignet sind, sollen einige Bretter aussortiert werden. Dazu werden diese Bretter von einer Bedienperson etwas aus dem Bretterteppich herausgezogen, in diesem Ausführungsbeispiel nach links. In der Fig. 1 ist ein auszusortierendes Brett mit dem Bezugszeichen 24 gezeigt. Man sieht, dass die Stirnseite 24a dieses Brettes weiter links liegt als die Stirnseite 22a eines durchlaufenden Brettes 22. Dieses manuell selektierte Brett 24 soll nun aus dem in Richtung A bewegten Bretterteppich ausgesondert werden. Dies geschieht mit dem links des Kettenförderers angeordneten Querförderer.

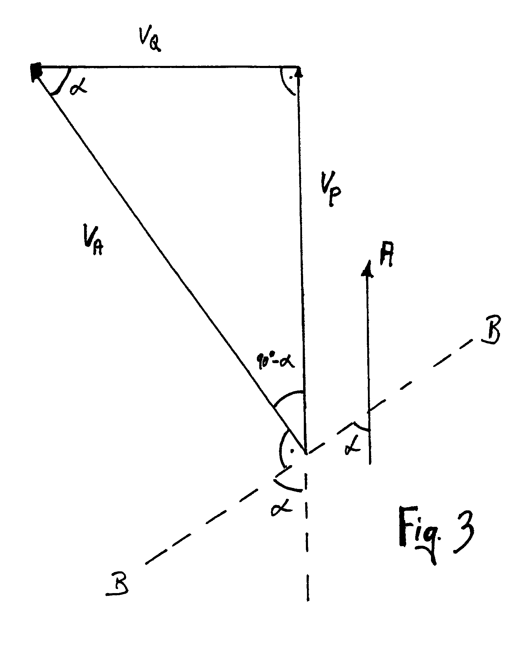

Der Querförderer weist eine an Tragarmen 42 befestigte untere Rolle 34 auf, deren horizontal verlaufende Achse sich entlang der Richtung B-B erstreckt. Die Richtung B-B der Achsen der Rollen schließt mit der Förderrichtung A einen spitzen Winkel α ein (siehe Fig. 3). Die Oberkante der unteren Rolle 34 liegt in etwa auf derselben Höhe wie die Unterkante der vorbeilaufenden Bretter. Die untere Rolle 34 ist Teil wenigstens eines Rollenpaars aus einer oberen und einer unteren Rolle, deren Achsen parallel zueinander sind, wobei die Rollen im Wesentlichen übereinander angeordnet sind. Wenigstens eine Rolle ist vertikal bewegbar und wenigstens eine Rolle antreibbar ist. Grundsätzlich müssen die einem Rollenpaar zugeordneten Rollen nicht unmittelbar übereinander liegen. Es sollte lediglich gewährleistet sein, dass die m folgenden noch zu erläuternde Förderbewegung beim Aussondern von Brettern 24 gewährleistet ist. Dies ist z.B. auch dann der Fall, wenn die oberen Rollen 31 auf Lücke mit den unteren Rollen 34 stehen oder wenn z.B. wenigstens zwei untere Rollen mit einer oberen Rolle zusammenwirken. Es ergibt sich damit zwischen jeder der unteren und der zugeordneten oberen Rolle je ein Rollenpaar im Sinne dieser Anmeldung.

An den unteren Tragarmen 42 ist jeweils ein Vertikalträger 44 angebracht. Zwischen den Vertikalträgern 44 erstreckt sich die Schwenkachse 47, welche parallel zu der Achse der unteren Rolle 34 ist. An der Schwenkachse 47 sind zwei Paar Schwenkarme 45, 45' angeordnet. Jedes Paar dieser Schwenkarme 45, 45' trägt eine Teilrolle 31, 32. Somit sind die beiden Teilrollen 31, 32 unabhängig voneinander schwenkbar, wobei sich im wesentlichen vertikale Hubbewegungen ergeben. Um die beiden Teilrollen 31, 32 unabhängig voneinander und gezielt bewegen zu können, sind die äußeren Schwenkarme 45 jeweils mit einer Kolben/Zylindereinheit mit dem Abstützelement 46 verbunden, welches wiederum starr an den Vertikalträgern 46 befestigt ist. Alle Rollen, also die beiden Teilrollen 31, 32 sowie die untere Rolle 34 sind mittels Elektromotoren 31a, 34a antreibbar. Der die zweite Teilrolle 32 antreibende Motor ist nicht dargestellt. Weiterhin sind in Fig. 1 das Trägerelement 46 und die Kolben/Zylindereinheiten nicht dargestellt.

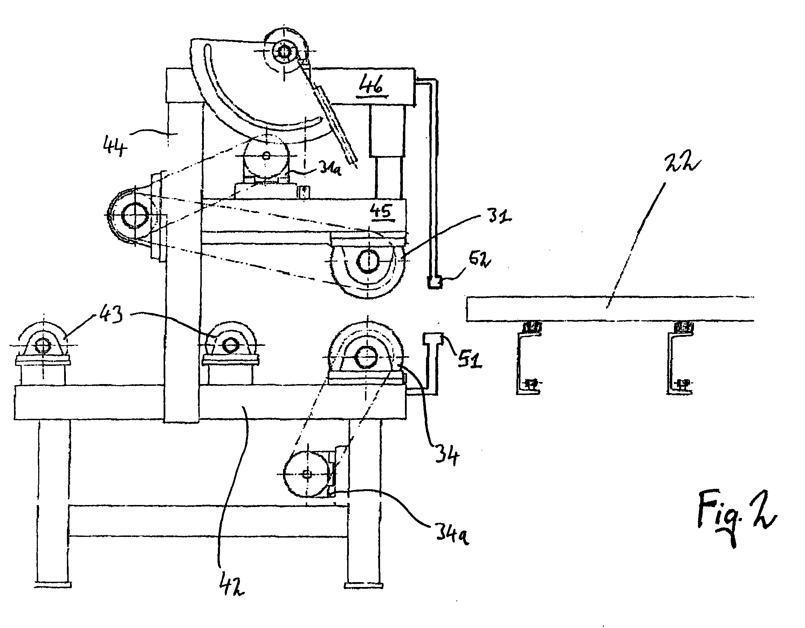

Vor jeder Teilrolle 31, 32 ist eine Lichtschranke 50, 50', bestehend aus Sender 51, 51' und Empfänger 52, 52' angeordnet. Die Position der Lichtschranken ist hierbei so gewählt, dass Bretter, die nicht aussortiert werden sollen, den Strahlengang der Lichtstrahlen nicht kreuzen, auszusortierende Bretter jedoch den Lichtstahl unterbrechen und somit ein Signal auslösen (s. Fign. 1 und 2). Wird ein Lichtschrankensignal ausgelöst, so wird die jeweilige Teilrolle mittels der zugehörigen Kolben/Zylindereinheit nach unten gedrückt.

Die Funktionsweise der oben beschriebenen Vorrichtung ist wie folgt: Ein Bretterstrom wird auf dem Kettenförderer in Richtung A mit einer Fördergeschwindigkeit v_{F} an dem Querförderer vorbeigeführt. Die linksseitigen Stirnkanten der Bretter sind hierbei so ausgerichtet, dass die Bretter, die nicht aussortiert werden sollen, die Strahlen der Lichtschranken nicht durchbrechen. Dies gilt nicht für Bretter, die zum Zwecke des Aussortierens um ein gewisses Stück nach links aus dem Bretterstrom herausgezogen wurden.

In der in Fig. 1 konkret dargestellten Situation wird das auszusortierende Brett 24 den Strahl der ersten Lichtschranke 50 durchbrechen und damit die Kolben/Zylindereinheit 48 betätigen. Dadurch wird die erste Teilrolle 31 nach unten und somit das auszusortierende Brett 24 auf die untere Rolle 34 gepresst. Entsprechend der Umfangsgeschwindigkeit der beiden Rollen wird das auszusortierende Brett 24 mit einer Aussortiergeschwindigkeit v_{A} aus dem Bretterstrom herausgezogen. Die Richtung dieser Bewegung erfolgt im rechten Winkel zur Richtung B-B der Achsen. Da die Richtung B-B der Achsen mit der Förderrichtung einen spitzen Winkel α einschließt, hat die Aussortiergeschwindigkeit v_{A} einen vektoriellen Anteil parallel zur Förderrichtung, im folgenden Parallelgeschwindigkeit v_{P}, und einen hierzu rechtwinkligen Anteil, dieser Anteil wird im folgenden als Quergeschwindigkeit v_{Q} bezeichnet.

Für die Beziehung zwischen Aussortiergeschwindigkeit und Parallelgeschwindigkeit gilt:
sin α = v_{P}/v_{A} bzw. α = arcsin v_{P}/v_{A} bzw. v_{A} = v_{P}/sin α,
s. Fig. 3.

Um Stauungen bzw. Verklemmungen von Brettern zu vermeiden, sollte die Parallelgeschwindigkeit so groß sein wie die Fördergeschwindigkeit: v_{P} = v_{F}. Nach den oben angegebenen Gleichungen ist das entweder über eine Anpassung des spitzen Winkels α oder über eine Anpassung der Aussortiergeschwindigkeit v_{A}, also über eine Änderung der Rollengeschwindigkeit möglich. In einer besonders bevorzugten Ausführungsform ist deshalb der Querförderer drehbar gelagert, so dass der spitzte Winkel α verändert werden kann. Idealerweise sind Stellmittel vorhanden, die den spitzen Winkel α automatisch der Fördergeschwindigkeit v_{F} anpassen. Der spitze Winkel α beträgt vorzugsweise zwischen 3° und 30°.

Angetrieben durch die untere Rolle 34 und die erste Teilrolle 31 wird das aussortierte Brett über die nicht angetriebenen Transportrollen 43 ausgeschoben. Nach dem kompletten Ausschieben des Brettes wird die erste Teilrolle 31 wieder in ihre obere Ausgangsposition angehoben.

Wenn zwei auszusortierende Bretter einander unmittelbar nachfolgen, kann es sein, dass die erste Teilrolle noch nicht wieder einsatzbereit ist, beispielsweise weil sie sich gerade in der Aufwärtsbewegung befindet. Dadurch kann das zweite auszusortierende Brett die erste Lichtschranke 50 passieren ohne von der ersten Teilrolle erfasst zu werden. Dieses Brett durchfährt dann die zweite Lichtschranke 50', was ein Absenken der zweiten Teilrolle mittels der ihr zugeordneten Kolben/Zylindereinheit auslöst. Das Herausziehen dieses Brettes erfolgt dann in analoger Weise zum oben Gesagten.

### Zweites Ausführungsbeispiel

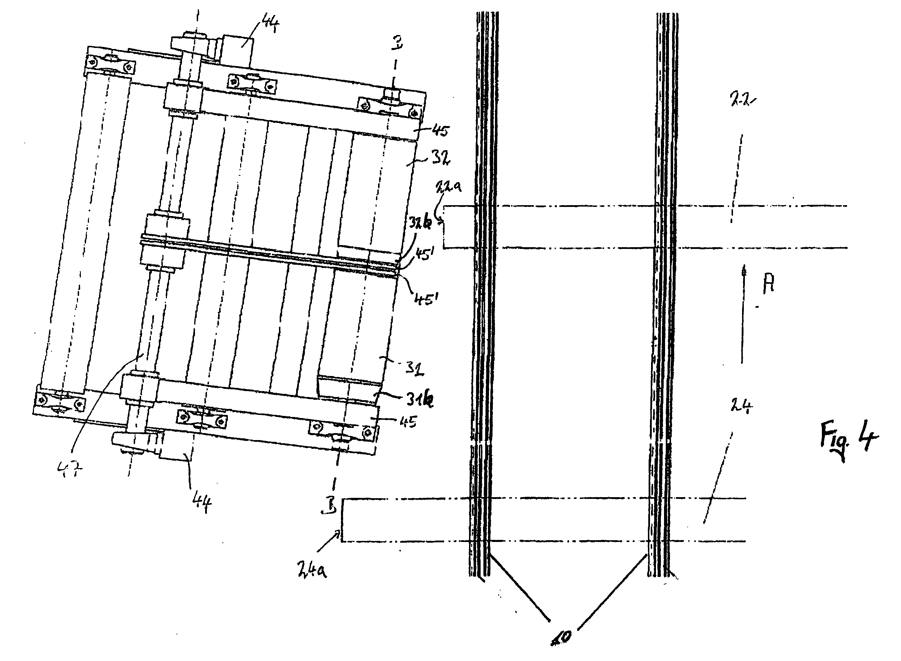

Ein weiteres Ausführungsbeispiel ist in Fig. 4 dargestellt. Hier wird auf Lichtschranken und Kolben/Zylindereinheiten verzichtet. Statt dessen liegen die beiden Teilrollen 31, 32 in ungestörtem Zustand aufgrund ihrer Gewichtskraft oder aufgrund von Federkräften auf der unteren Rolle 34 auf. Die gegen die Förderrichtung zeigenden vorderen Enden 31b, 32b der beiden Teilrollen 31, 32 laufen kegelstumpfförmig an. Wird ein auszusortierendes Brett 24a durch den Kettenförderer gegen das kegelstumpfförmige Ende 31b gedrückt, so wird die erste Teilrolle 31 angehoben und das Brett gleitet zwischen die erste Teilrolle 31 und die untere Rolle 34. Aufgrund der Feder- und/oder Gewichtskraft wird das Brett von der ersten Teilrolle 31 auf die untere Rolle 34 gedrückt. Das Herausziehen dieses Brettes geschieht dann wie im ersten Ausführungsbeispiel.

Wie im ersten Ausführungsbeispiel ist die Aufgabe der zweiten Teilrolle die, dafür zu sorgen, dass auch ein weiteres auszusortierendes Brett, welches einem auszusortierenden Brett unmittelbar nachfolgt, sicher aus dem Bretterteppich entfernt wird. Es kann nämlich passieren, dass ein solches zweites Brett die erste Teilrolle 31 passiert, ohne von dieser erfasst zu werden. Diese weitere Brett läuft dann jedoch aufgrund des Konus der zweiten Teilrolle 32 zwischen die zweite Teilrolle 32 und die untere Teilrolle 34 und wird entsprechend aus dem Bretterteppich herausgezogen.

### Drittes Ausführungsbeispiel

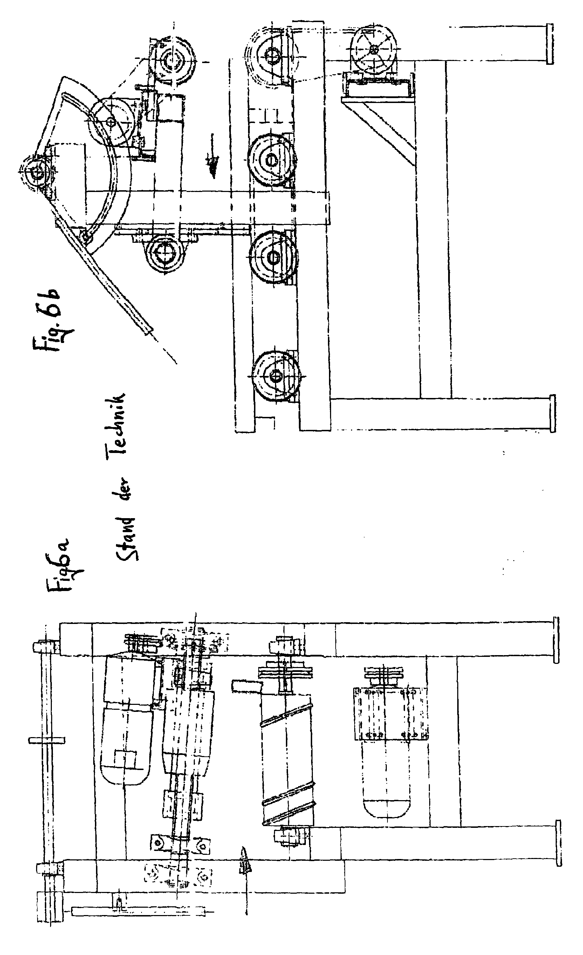

Gemäß Fig 6 kann der Querförderer auch so aufgebaut sein, dass die oberen oder unteren Rollen, hier die oberen Rollen 70,71,72 der Rollenpaare kürzer als die andere, hier untere Rolle 60,61,62 des Paares sind. Vorzugsweise sind die kürzeren Rollen 70,71,72 der hintereinander angeordneten Rollenpaare zueinander in Richtung der Achse B-B zueinander versetzt. Dieses Versetzen wird vorzugsweise - wie in Fig. 6 von vorne nach hinten zunehmend nach links - immer in die gleiche Richtung erfolgen. Damit können sich die hintereinander angeordneten kürzeren Rollen 70,71,72 in einer Projektion in Förderrichtung des Querförderers überlappen. Dadurch kann z.B. die von den oberen Rollen aufzubringende Kraft erhöht werden und dennoch können Bretter unterschiedlichster Breite zuverlässig erfasst werden.

In allen Ausführungsbeispielen ist es vorteilhaft, die Oberflächen aller Rollen aus einem weichen Material wie Gummi herzustellen, um eine möglichst hohe Reibung zwischen Brett und Rollen zu erzielen. Eine profilierte Metalloberfläche kann in manchen Fällen jedoch ebenfalls genügen.

Anstatt eine durchgehende untere Rolle zu verwenden, kann auch diese geteilt werden, so dass sich zwei komplett getrennte Rollenpaare ergeben. Diese Variante eignet sich insbesondere für einen modularen Aufbau.

Bei Anlagen mit sehr hoher Förderleistung kann es nötig sein, mehr als zwei Teilrollen bzw. Rollenpaare vorzusehen. Diese weiteren Teilrollen, bzw. Rollenpaare ändern am prinzipiellen Aufbau der Vorrichtung nichts.

### Bezugszeichenliste

- 10: Förderstrang
- 22: durchlaufendes Brett
- 22a: Stirnfläche des durchlaufenden Brettes
- 24: auszusortierendes Brett
- 24a: Stirnfläche des auszusortierenden Brettes
- 31: erste Teilrolle
- 31a: erster Motor
- 32: zweite Teilrolle
- 31b, 32b: vordere Enden
- 34, 60 .. 62: untere Rolle
- 34a: zweiter Motor
- 42: Tragarm
- 43: Transportrolle
- 44: Träger
- 45: Schwenkarm
- 46: Abstützelement
- 47: Schwenkachse
- 48: Kolben/Zylindereinheit
- 50,50': Lichtschranke
- 51,51': Sender
- 52, 52': Empfänger
- 70 .. 72: obere Rollen
- A: Förderrichtung
- B-B: Achsenrichtung
- v_{F}: Fördergeschwindigkeit
- v_{A}: Aussortiergeschwindigkeit
- v_{P}: Parallelgeschwindigkeit
- v_{Q}: Quergeschwindigkeit
- α: spitzer Winkel

## Patentansprüche

1. Vorrichtung zum Aussortieren von Brettern aus einem Bretterteppich mit einer Fördereinrichtung, welche den Bretterteppich entlang einer Förderrichtung (A) bewegt, und einem neben der Fördereinrichtung angeordneten Querförderer mit wenigstens einem Rollenpaar aus einer oberen und einer unteren Rolle, wobei die Richtung (B-B) der Achsen der Rollen parallel zueinander sind und die Rollen im Wesentlichen übereinander angeordnet sind und wenigstens eine Rolle vertikal bewegbar und wenigstens eine Rolle antreibbar ist,
**dadurch gekennzeichnet, dass** die Richtung (B-B) der Achsen der Rollen mit der Förderrichtung (A) einen spitzen Winkel (α) einschließen.

2. Vorrichtung nach Anspruch 1, **dadurch gekennzeichnet, dass** der spitze Winkel (α) einen Wert zwischen 3° und 30° aufweist.

3. Vorrichtung nach Anspruch 1 oder 2, **dadurch gekennzeichnet, dass** der spitze Winkel veränderbar ist.

4. Vorrichtung nach Anspruch 3, **dadurch gekennzeichnet, dass** Stellmittel vorhanden sind, die den spitzen Winkel in Abhängigkeit von der Geschwindigkeit der Fördereinrichtung verändern.

5. Vorrichtung nach einem der vorangehenden Ansprüche, **dadurch gekennzeichnet, dass** mehrere Rollenpaare hintereinander angeordnet sind, deren Achsen vorzugsweise parallel zueinander sind.

6. Vorrichtung nach Anspruch 5, **dadurch gekennzeichnet, dass** die oberen oder unteren Rollen der Rollenpaare kürzer als die andere Rolle (60,61,62) des Paares sind und dass die kürzeren Rollen (70,71,72) der hintereinander angeordneten Rollenpaare zueinander in Richtung der Achse (B-B) zueinander versetzt sind.

7. Vorrichtung nach Anspruch 6, **dadurch gekennzeichnet, dass** sich die hintereinander angeordneten kürzeren Rollen (70,71,72) in einer Projektion in Förderrichtung des Querförderers überlappen.

8. Vorrichtung nach einem der Ansprüche 1 bis 4, **dadurch gekennzeichnet, dass** die obere oder die untere Rolle in mehrere Teilrollen geteilt ist, so dass die Vertikalbewegungen der Teilrollen unabhängig voneinander sind.

9. Vorrichtung nach einem der vorangehenden Ansprüche, **dadurch gekennzeichnet, dass** eine oder mehrere der Rollen an ihrem vorderen Ende kegel- oder kegelstumpfförmig anlaufen.

10. Vorrichtung nach einem der vorangehenden Ansprüche, **dadurch gekennzeichnet, dass** die zu einem Rollenpaar gehörenden Rollen mittels Federkraft aufeinander gedrückt werden.

11. Vorrichtung nach einem der Ansprüche 1 - 9, **dadurch gekennzeichnet, dass** sich die oberen und/oder die unteren Rollen mittels aktiver Elemente, vorzugsweise wenigstens einer pneumatischen Kolben-Zylinder-Einheit, vertikal bewegen lassen.

12. Vorrichtung nach Anspruch 11, **dadurch gekennzeichnet, dass** Sensorelemente, vorzugsweise wenigstens eine Lichtschranke, im Bereich der Fördereinrichtung angeordnet sind, mittels derer die aktiven Elemente angesteuert werden.

13. Vorrichtung nach einem der vorangehenden Ansprüche, **dadurch gekennzeichnet, dass** wenigstens ein Teil der Rollen eine weiche und/oder eine profilierte Oberfläche aufweist.
